# EUROPÄISCHE PATENTSCHRIFT

(11) **EP 0 494 399 B1**
(45) Veröffentlichungstag und Bekanntmachung des Hinweises auf die Patenterteilung: **21.06.1995**
(21) Anmeldenummer: 91121345.2
(22) Anmeldetag: 11.12.1991
(51) Int. Cl.: C02F 9/00, D21C 5/02, D21C 11/00

(54) **Verfahren zum Führen und Behandeln des Produktionswassers in einer Papierfabrik mit Altpapieraufbereitungsanlage**
Process to direct and treat production waters in a paper factory with installation for treatment of waste paper
Procédé pour conduire et traiter les eaux de production dans une usine à papier avec installation de traitement de vieux papiers

(30) Priorität: 29.12.1990 DE 4042224
(43) Veröffentlichungstag der Anmeldung: 15.07.1992
(73) Patentinhaber: PWA INDUSTRIEPAPIER GmbH, 83064 Raubling (DE)
(72) Erfinder: Menges, Wilhelm, W-8204 Brannenburg (DE)
(74) Vertreter: Fuchs Mehler Weiss

(56) Entgegenhaltungen:
- EP-A- 0 133 846
- ABSTRACT BULLETIN OF THE INSTITUTE OF PAPER CHEMISTRY. Bd. 56, Nr. 9, März1986, APPLETON US Seite 1106; HABETS, L.H.A. ET AL.: 'Anaerobic waste watertreatment plant at Papierfabriek Roermond working successfully and savingexpenses.'
- WOCHENBLATT FüR PAPIERFABRIKATION Bd. 119, Nr. 3, 15. Februar 1991, Seite 94;FRISCHKNECHT, H. ET AL.: 'Model AG, Weinfelden, baute anaerobe biologischeKläranlage (Biothane).'

## Beschreibung

Die Erfindung betrifft ein Verfahren zum Führen und Behandeln des Produktionswassers in einer Papierfabrik mit Altpapieraufbereitungsanlage, in welcher das Altpapier unter Zusatz von Auflösewasser aufgelöst und die dabei gewonnene Faserstoffsuspension anschließend eingedickt und für die Papiererzeugung zur Verfügung gestellt wird.

Bei der Papierherstellung erfolgen eine Reihe von Verfahrensschritten, bei denen Rohstoffe, insbesondere Faserstoffe zur Auflösung und/oder Reinigung mit Wasser verdünnt, an anderen Stellen aber für die Weiterbearbeitung wieder eingedickt werden müssen, zuletzt bei der Entwässerung einer aus der Suspension heraus auf dem umlaufenden Sieb einer Papiermaschine abgelegten Papierbahn. Um einerseits Rohstoffverluste zu vermeiden, andererseits aus Umweltgründen aber auch das Abwasser der Fabrik nicht mit Faserstoffen und anderen Stoffen unnötig zu belasten, ist man bei der Papierherstellung stets bemüht, stoffhaltige Wässer, die bei der Konzentration von Stoffen in einer Stufe anfallen, möglichst unmittelbar in der vorangehenden Verdünnungsstufe wieder zu verwenden, so daß der Siebdurchgang an Faserstoffen und anderen Stoffen bei der Eindickung des Rohstoffes, der sich nie ganz vermeiden läßt, bei Verwendung des Filtrats als Auflösewasser dem Stoff wieder zugeführt wird. Da man jedoch im allgemeinen nicht ohne einen bestimmten Frischwasserzusatz bei der Fabrikation auskommt, fällt im Endeffekt auch Überschußabwasser aus dem Gesamtprozeß an, welches dann einer im allgemeinen mehrstufigen Reinigung unterzogen wird, bevor es in den Vorfluter entlassen werden kann. Zu den üblichen Reinigungsanlagen zur Reinigung des aus der Fabrik abgegebenen Prozeßabwassers gehört bei Papier- und Zellstoffabriken im allgemeinen heutzutage auch eine biologische Abwasser-Reinigungsstufe. Kennzeichnend für die Belastung eines Abwassers sind unter anderem der biologische (BSB) und der chemische Sauerstoffbedarf (CSB), der benötigt wird, um im Abwasser enthaltene im wesentlichen organische Stoffe abzubauen. Die Gesetzgebung setzt für diese Werte heutzutage enge Grenzen.

Eine Bestimmungsmethode zum Bestimmen des chemischen Sauerstoffbedarfs findet sich beispielsweise in dem Merkblatt X/2/76 "Bestimmung des chemischen Sauerstoffbedarfs (CSB_{Cr}) in Abwässern von Zellstoff- und Papierfabriken" des Vereins Zellcheming in Darmstadt. Als CSB-Fracht eines Abwassers bezeichnet man die unter Sauerstoffverbrauch chemisch abbaubaren Stoffe, umgerechnet auf die Menge des für ihren Abbau benötigten Sauerstoffes.

Aus dem ABSTRACT BULLETIN OF THE INSTITUTE OF PAPER CHEMISTRY, Appleton, Wis. USA, Bd. 56, Nr. 9, März 1986, Seite 1106, Abstract Nr. 10047, HABETS et al. "Anaerobic waste water treatment plant at Papierfabriek Roermond working successfully and saving expenses" sind Einsatz und Wirkungsweise eines UASB-Reaktor für die Restbehandlung in der Papierindustrie bekannt, wobei diese Veröffentlichung jedoch keinen Hinweis darauf enthält, welches Restwasser, d.h. aus welcher Prozessstufe, dem Reaktor zugeführt wird.

Die EP-A-133 846 beschreibt die Behandlung von Abwasser aus einer sog. Halbstoff-Erzeugungsanlage. Bei Halbstoff-Erzeugungsanlagen, seien dies nun Zellstofferzeugungsanlagen oder Anlagen für die Holzstofferzeugung, insbesondere solche für chemisch-mechanischen Holzstoff, wird Holz im allgemeinen durch Chemikalieneinsatz aufgeschlossen, was notwendigerweise zur Folge hat, daß die nicht in Faserstoff als Erzeugnis des Prozesses überführten Bestandteile des Holzes und die für den Aufschluß eingesetzten Chemikalien vom Erzeugnis abgetrennt werden müssen, weswegen der erzeugte Halbstoff, bevor er als solcher entweder zu einer handelsfähigen Form eingedickt und getrocknet oder unmittelbar einer Papierfabrik zugeführt wird, einem Waschprozeß unterworfen werden muß. Für diesen Waschprozeß wird im allgemeinen Frischwasser verwendet, welches in der Regel im Gegenstrom mit dem Produkt geführt und durch Kreislaufschaltungen derart mit den Abfallprodukten aufkonzentriert wird, daß sich nur eine möglichst geringe Menge an Abwasser ergibt, aus dem, wenn möglich, die Aufschlußchemikalien zurückgewonnen und die nicht als Faser aus dem Aufschlußprozeß hervorgehenden Holzbestandteile in anderer Weise aufbereitet werden.

Aus den Fig. 1 und 2 der EP-A-133 846 geht hervor, daß das Filtrat der Waschstufe bzw. der Filterpressen im wesentlichen im Kreislauf im Prozeß geführt wird. Als Abwasser wird jeweils nur ein geringer Anteil dieser Kreislaufflüssigkeit abgezogen.

Im Zuge der Wiederverwendung von Rohstoffen nimmt bei der Papierherstellung auch die Wiederaufarabeitung von Altpapier einen immer höheren Stellenwert ein. Produktionslinien für die Aufbereitung von Altpapier verwenden im allgemeinen einen speziell ausgebildeten Altpapierauflöser, einen sogenannten Pulper, in dem das Altpapier, soweit möglich, zerfasert wird und dabei gleichzeitig Schwerschmutzteile durch eine Bodenschleuse, großflächige Teile wie Gewebestücke, Schnüre und dergleichen durch einen sich spinnenden Zopf und weiterer kleinflächiger Leichtschmutz durch einen speziellen Seitenabzug entfernt werden. Die verbleibende Faserstoffsuspension wird dann zum Entfernen von noch verbliebenen Leichtschmutzteilen in einer Sortierungsvorstufe weiter gereinigt und gegebenenfalls in einer Feinsortierung in eine Langfaser- und eine Kurzfaserkomponente aufgeteilt, die dann für die Herstellung unterschiedlicher Papierqualitäten verwendet werden. Die in der Sortierung verdünnte Faserstoffsuspension wird vor ihrer Weiteraufbereitung zum Papierstoff eingedickt, und das Eindickfiltrat wird im allgemeinen unmittelbar zur Auflösung des Altpapieres im Pulper wiederverwendet. Weiteres Wasser, welches beim Entwässern der ausgeschiedenen Abfallprodukte anfällt, wird ebenfalls als Auflösewasser wieder eingesetzt. Da das aufgelöste Altpapier, welches nur mit einem geringen Wassergehalt in die Aufbereitung gelangt, als Faserstoff mit einem nicht unerheblichen Wassergehalt die Altpapieraufbereitung verläßt, muß zusätzliches Wasser für die Altpapieraufbereitung zugesetzt werden. Hierfür wird im allgemeinen faserstoffhaltiges Rückwasser aus der Papierfabrik verwendet.

Dieses bekannte Verfahren ist mit zufriedenstellendem Ergebnis anwendbar, wenn es sich bei dem eingesetzten Altpapier um sortierte Abfälle, beispielsweise aus der papierverarbeitenden Industrie, handelt. Solches Altpapier wird allgemein in Ballen gepreßt angeliefert und enthält nicht allzu viele Verunreinigungen. Um des großen Anfalls an Haushaltsabfall Herr zu werden, wird angestrebt, zunehmende Anteile von gesammeltem Altpapier (zum Beispiel Haushaltsabfall aus Papiercontainern) in die Altpapieraufbereitung mit hereinzunehmen. Da sich im Haushaltsabfall beispielsweise auch ein großer Anteil von Lebensmittelverpackungen befindet, erhöhen sich durch Mitverwendung solchen Altpapieres die in der Altpapieraufbereitung in Lösung gehenden Stoffe, die zum Teil von den Materialien oder Flüssigkeiten herrühren, die mit dem Papier verpackt waren.

Untersuchungen haben ergeben, daß sich bei erhöhter Mitverwendung von Haushaltsaltpapier die CSB-Fracht im Kreislauf des Altpapier-Auflösewassers stark anreichert. Eine entsprechend ausgelegte Endkläranlage ist zwar in der Lage, die das Abwasser belastenden Stoffe in erforderlicher Menge abzubauen, es ist aber zu beachten, daß ein nicht unerheblicher Teil der erhöhten CSB-Fracht im Papier als Enderzeugnis verbleibt, da selbst nach weitgehender Entwässerung des Faserstoffes in der Papiermaschine der Rest des Wassers in der Papierbahn durch Trocknung verdampft wird und die in diesem Wasseranteil enthalten gewesenen Belastungsstoffe in der Papierbahn verbleiben.

Diese Stoffe sind nicht nur aus hygienischen Gründen im Papier unerwünscht, sie setzen im allgemeinen auch die Festigkeit des hergestellten Papiererzeugnisses herab, so daß diese Festigkeitseinbuße beispielsweise durch Stärkeleimung des Papieres in der Papiermaschine wieder ausgeglichen werden muß, wobei die Behandlung und Aufbereitung der Stärke ihrerseits wieder ein Abwasserproblem darstellt.

Um diese Probleme zu beseitigen, wird erfindungsgemäß vorgeschlagen, das Eindickungs-Rückwasser aus der Altpapierstoff-Eindickung und die sonstigen in der Altpapieraufbereitung anfallenden Wässer, insgesamt als Altpapier-Filtrate bezeichnet, zusammen zu erfassen und nach eventueller Grobreinigung unmittelbar einer die CSB-Fracht reduzierenden Behandlung zu unterwerfen.

Als eine derartige Behandlung wird eine anaerob-biologische Klärstufe vorgeschlagen, deren Anwendung im Rahmen einer Endkläranlage einer Papierfabrik grundsätzlich bekannt ist. Es kann zur anaerob-biologischen Klärung ein sogenannter UASB-Reaktor, z.B. aus der DE-A-27 28 585 oder DE-C-29 20 978 bekannt, eingesetzt werden (Upflow-Anaerobic-Sludge-Blanket-Reaktor).

Der UASB-Reaktor ist im allgemeinen zur Behandlung von Abwasser vorgesehen, welches bereits von groben mechanischen Verunreinigungen befreit ist. Um den UASB-Reaktor von der Bewältigung von wesentlichen mechanischen Verunreinigungen im Wasser zu entlasten, wird der anaerob-biologischen Klärstufe zweckmäßigerweise eine Grobreinigung vorgeschaltet, in der die mechanischen Verunreinigungen durch Sedimentation und/oder Flotation weitgehend abgeschieden werden. Bei den flotierbaren Verunreinigungen handelt es sich im wesentlichen um Faserstoffe oder Faserstoffbruchstücke, bei den sedimentierbaren Verunreinigungen im allgemeinen um Papierfüllstoffe und dergleichen, d.h. Materialien mineralischer Art, die spezifisch schwerer sind als Wasser. Erfindungsgemäß werden diese Fangstoffe, d.h. im allgemeinen die flotierten und die sedimentierten Feststoffe wieder in die Altpapierauflösung zurückgeführt. Als Aggregat, mit welchem diese Grobreinigung durchgeführt werden kann, läßt sich vorteilhaft ein sogenannter Trichter-Stoffänger verwenden, wie er in der Papierindustrie zur Grobreinigigung von stoffhaltigen Wässern üblich ist. Mit einem solchen Trichter-Stoffänger können Flotation und Sedimentation gleichzeitig durchgeführt werden. Die flotierten Stoffe werden über einen Überlauf des Trichters und die sedimentierten Stoffe aus dem Sumpf in der Trichterspitze abgezogen, während das so grob vorgereinigte Wasser dem mittleren Bereich des Trichters entnommen wird, wobei die Entnahmemenge derart geregelt ist, daß noch ein die flotierten Stoffe enthaltender Überlauf gewährleistet bleibt.

Eine erste grundsätzliche Ausführungsform der Erfindung besteht darin, daß das anaerob gereinigte, d.h. von einem maßgeblichen Anteil seiner CSB-Fracht befreite Altpapier-Filtrat direkt als Altpapier-Auflösewasser wieder verwendet wird. Um das vorhandene Defizit an Auflösewasser zu decken, wird zweckmäßigerweise faserhaltiges Rückwasser aus dem Papiermaschinenbereich mit verwendet. Hierbei kann es vorteilhaft sein, daß dieser Anteil an faserhaltigem Papiermaschinenrückwasser nicht unmittelbar dem Auflösewasser zugegeben sondern ebenfalls zur Reduzierung seiner CSB-Fracht mit durch die anaerob-biologische Klärstufe geführt wird. Feststoffe auch aus diesem Zusatzwasser werden vorteilhafterweise in der dem biologischen Reaktor vorgeschalteten Grobreinigung weitgehend abgeschieden, um sie ohne Durchlauf durch die biologische Klärstufe unmittelbar der Altpapierauflösung zuzuführen.

Wird ein erheblicher Teil der CSB-Fracht des Prozeßwassers durch anaerob-biologische Klärung an der erfindungsgemäß vorgeschlagenen Stelle des Wasserkreislaufes entfernt, kann man eventuell auf eine weitere anaerob-biologische Klärstufe in der Endabwasser-Kläranlage des Werkes verzichten. Es entsteht daher in einem solchen Fall durch die erfindungsgemäße Anordnung einer anaerob-biologischen Klärstufe kein wesentlich zusätzlicher Investitionsbedarf, weil die anaerobe Klärung lediglich von einer Prozeßstelle an eine andere verlagert wird, was in der Praxis durch eine rohrleitungsmäßige Umschaltung erfolgen kann.

Eine zweite grundsätzliche und weitere Vorteile bietende Variante der Erfindung besteht jedoch darin, daß das in der anaeroben Klärstufe in seiner CSB-Fracht reduzierte Wasser als Werksabwasser vorgesehen und in diesem Fall, auch wenn es dafür geeignet ist, nicht wieder in der Altpapierauflösung verwendet wird. Der Altpapierauflösung können bzw. müssen dann alle überschüssigen aber weitgehend faserhaltigen Rückwässer aus der Papierfabrik, d.h. dem Papiermaschinenbereich zugeführt werden. Während nach bekannten Verfahren das aus dem Gesamtprozeß ausgeschiedene und der Werks-Endkläranlage zugeführte Abwasser im wesentlichen Überschußwasser aus dem Papiermaschinenbereich war, wird durch die zweite Variante der Erfindung die Gesamtwasserführung derart verändert, daß alle aus dem Papiermaschinenbereich anfallenden Überschußwässer der Altpapieraufbereitung zugeführt werden, so daß im Papiermaschinenbereich im wesentlichen kein Endabwasser entsteht, und daß dafür allein Altpapier-Filtrate das Werksabwasser bilden, welches der Kläranlage zugeführt wird. Da bei dieser Variante die erfindungsgemäß für das Altpapier-Filtrat vorgesehene anaerob-biologische Klärstufe einen Teil der Endkläranlage bildet, ist bei dieser zweiten Verfahrensvariante der anaeroben Klärstufe vorteilhafterweise in an sich bekannter Art eine aerob-biologische Klärstufe nachgeschaltet. Eine solche Klärstufe besteht im allgemeinen aus einem Belebtschlammbecken und einem nachgeschalteten Nachklärbecken für das Überlaufwasser aus dem Belebtschlammbecken.

Sowohl in der anaeroben wie auch aeroben Kläranlage fällt überschüssiger Belebungsschlamm an, der im allgemeinen in einem Schlammeindicker eingedickt und einer Deponie oder sonstigen Abfallstoffbeseitigung zugeführt wird. Es ist bereits gelungen, solchen überschüssigen Belebtschlamm, der auch noch andere Festbestandteile wie restliche Faserstoffe enthalten kann, wieder in der Zellstoffauflösung in einer Papierfabrik mit einzusetzen. Bei einer bevorzugten Ausführungsform der Erfindung wird auch das Konzentrat aus der Schlammeindickung wieder im Kreislauf eingesetzt, jedoch speziell in der Altpapierauflösung, weil eine eventuelle CSB-Fracht aus diesem Schlamm wieder in das Altpapier-Filtrat gelangt und somit unmittelbar erneut der biologischen Behandlung unterworfen wird. Insoweit Festbestandteile des Schlammes in den Produktionsgang gehen, hat sich dies nicht als nachteilig erwiesen.

Die Rückführung aller stark CSB-belasteten Stoffe und Wässer in die Altpapieraufbereitung, deren Filtrat unmittelbar der anaerob-biologischen Klärstufe zugeführt wird, hat den Vorteil, daß dadurch in dieser Stufe die mit der anaeroben Behandlung verbundene Biogaserzeugung ansteigt, wodurch aus der CSB-Fracht in erhöhtem Maße ein Energieträger erzeugt werden kann.

Wesentlich gemäß der Erfindung ist, daß das gesamte Altpapier-Filtrat nach gegebenenfalls vorgeschalteter Vorreinigung unmittelbar der anaeroben Biologie zugeführt wird, wobei Stoffe und Wässer, die im Endeffekt auch dorthin gelangen sollen, vorteilhafterweise zuerst in die Altpapierauflösung geführt werden, um von dort als Filtrat in die Wasseraufbereitung zu gelangen.

Im Folgenden wird die Erfindung unter Hinweis auf die beigefügten Zeichnungen im einzelnen noch näher erläutert. Darin stellen dar:
- Fig. 1: ein Sankey-Diagramm einer typischen CSB-Frachtverteilung in einer Papierfabrik mit Altpapieraufbereitungsanlage gemäß einer ersten grundsätzlichen Ausführungsform der Erfindung und
- Fig. 2: ein zum Teil schematisches Ablaufdiagramm einer zweiten grundsätzlichen Ausführungsform der Erfindung.

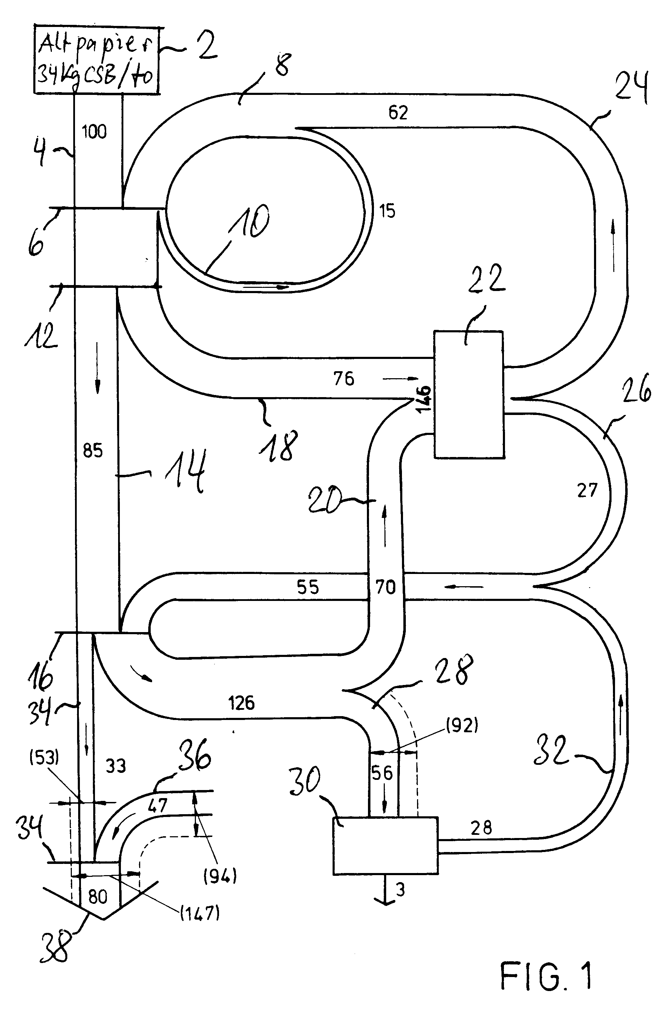

In dem Sankey-Diagramm der Figur 1 ist die aus dem Altpapiereinsatz herrührende CSB-Fracht im Wasserkreislauf einer Papierfabrik mit Altpapieraufbereitungsanlage dargestellt, wobei die einzelnen Kreisläufe jedoch auf das wesentlichste zusammengefaßt sind. Die Breite der einzelnen Bahnen entspricht in etwa maßstäblich der CSB-Fracht, wobei diese Fracht in den einzelnen Strömen zusätzlich in Zahlen angegeben ist. Die Zahlen beziehen sich auf einen Einsatz von 100 kg CSB-Fracht, der mit dem Altpapier in den Prozeß gelangt. Dabei wurde von der Annahme ausgegangen, daß das Altpapier eine CSB-Fracht von etwa 34 kg pro Tonne mitbringt, so daß 100 kg CSB-Fracht einer Altpapiermenge von knapp 3 Tonnen entspricht. Als CSB-Fracht im Altpapier werden diejenigen Stoffe und Verunreinigungen im Altpapier angenommen, die bei dessen Auflösung in den Wasserkreislauf gelangen und eine entsprechende Menge Sauerstoff zum Abbau benötigen.

Der Block 2 oben links im Diagramm stellt den Altpapiereinsatz in der Altpapieraufbereitungsanlage dar. Dargestellt ist durch das Band 4 eine Menge von 100 kg CSB, die in die Altpapierauflösung gelangen, welche durch den Strich 6 repräsentiert wird. In die Altpapierauflösung 6 gelangt außer dem Altpapier selbst Auflösewasser, welches durch den Strom 8 dargestellt ist, der seinerseits eine CSB-Fracht von 77 kg mitbringt. Der Strom 10 repräsentiert Schmutzstoff-Filtrat, welches in der Altpapierauflösung 6 anfällt und unmittelbar im Kreislauf in das Auflösewasser 8 zurückgeführt wird. Das Schmutzstoff-Filtrat 10 enthält eine CSB-Fracht von 15 kg, die im Kreislauf läuft.

Der zu einer Faserstoffsuspension aufgelöste Altpapierstoff gelangt nach einigen Verfahrensmaßnahmen, die an ihm vorgenommen werden, in eine Eindickung, die durch den Querstrich 12 angedeutet ist. Von der zwischen Altpapierauflösung 6 und Eindickung 12 in der Faserstoffsuspension befindlichen CSB-Fracht verbleiben 85 kg in dem eingedickten Faserstoff, der durch den Strom 14 dargestellt ist und der Papierfabrik bzw. dem Papiermaschinenbereich 16 zugeführt wird, während 76 kg CSB-Fracht im Eindickungsrückwasser verbleiben, welches durch den Strom 18 dargestellt ist. In diesem Eindickungsrückwasser 18 wird, da seine Wiederverwendung allein in der Altpapierauflösung nicht ausreicht, ein Teilstrom 20 von Rückwasser aus dem Papiermaschinenbereich 16 zugemischt, welcher seinerseits eine CSB-Fracht von 70 kg enthält. Die Ströme 18 und 20, die zusammen eine CSB-Fracht von 146 kg enthalten, werden einer anaerob-biologischen Wasserklärstufe 22 zugeführt. Das diese Klärstufe verlassende Wasser hat noch eine CSB-Fracht von 89 kg, was einer CSB-Reduzierung von etwa 40 % entspricht. Dieses ist in etwa die minimale Reduzierung, die allgemein erreichbar sein sollte. Das die anaerobe Klärstufe verlassende Wasser 22 wird größtenteils als Auflösewasser 24 in die Altpapierauflösung 6 zurückgeführt und bringt eine CSB-Fracht von 62 kg mit, während der Rest des Wassers, dargestellt durch den Strom 26 mit einer CSB-Fracht von 27 kg mit in das Papierfabrikabwasser gelangt. Das Überschußwasser aus der Papierfabrik, dargestellt durch den Strom 28 gelangt in die Werkskläranlage 30, die im wesentlichen eine aerob-biologische Klärstufe aufweist. Fangstoff bzw. Schlämme aus der Werkskläranlage 30 und repräsentiert durch den Strom 32 gelangen in den Papiermaschinenkreislauf zurück.

Der den Papiermaschinenbereich 16 verlassende Strom 34 stellt die mechanisch entwässerte Papierbahn dar, in der eine CSB-Fracht von 33 kg verbleibt, da das dieser Fracht entsprechende Wasser aus der Papierbahn verdampft wird. Der Querstrich 34 repräsentiert die Leimpresse in der Papiermaschine, mit der auf die weitgehend trockene Papierbahn eine Stärkeleimung aufgetragen wird, die durch den Strom 36 dargestellt ist. Die Stärke stellt als solche im wesentlichen CSB-Fracht dar und geht daher mit 47 kg in die Papierbahn ein, die als Endprodukt 38 damit den Prozeß mit einer CSB-Fracht von 80 kg verläßt. Aus der Werkskläranlage 30 gelangt eine Restfracht von 3 kg CSB in den Vorfluter.

Die Zusammenhänge des Diagrammes seien noch einmal herausgestellt: den Eingang an CSB-Fracht in den Prozeß, soweit er hier betrachtet ist, stellen das Altpapier 4 und die Stärke 36 dar. Dabei sind die Zahlen so aufzufassen, daß für ein Papier, für welches ein Altpapieranteil mit 100 kg CSB-Fracht eingesetzt wird, eine Stärkemenge mit 47 kg CSB-Fracht zur Leimung verwendet wird. 57 kg dieser gemeinsamen CSB-Fracht werden in der anaeroben Klärstufe 22 abgebaut und
3 kg verlassen die Werkskläranlage 30. 80 kg von der eingeführten CSB-Fracht von 147 kg verlassen den Prozeß mit dem Endprodukt 38. Die Bilanz im dargestellten Beispiel geht nicht ganz auf. Dies rührt einerseits daher, daß Rechenabrundungen vorgenommen wurden und andererseits daher, daß auch noch die übrigen für die Papierherstellung verwendeten Faserstoffe die Bilanz beeinflussen.

Mit gestrichelten Linien ist an einigen Stellen des Diagramms dargestellt, welche CSB-Frachten sich insbesondere im Endprodukt ergeben, wenn die erfindungsgemäß vorgesehen anaerobe Klärstufe 22 an der dargestellten Stelle entfällt und der Altpapierauflösekreislauf 8, 18, 24 sich entsprechend in seiner CSB-Fracht anreichert. Danach würde das nicht geleimte Papier 34 statt einer CSB-Fracht von 33 kg eine solche von 53 kg enthalten. Als Folge davon müßte die Stärkemenge 36 in der Leimpresse 34 derart erhöht werden, daß die durch sie repräsentierte CSB-Fracht von 47 auf 94 kg steigt. Damit würde das Endprodukt 38 den Prozeß mit 147 anstelle von 80 kg CSB-Fracht verlassen. Durch die erfindungsgemäße anaerobe Klärung im Altpapierauflösekreislauf kann daher die vom Fertigerzeugnis mitgeführte CSB-Fracht auf etwa 55 % reduziert werden.

Der Strom 24 für das Altpapierauflösewasser würde sich ohne die anaerobe Klärstufe 22 in seiner CSB-Fracht von 62 kg auf etwa 180 kg anreichern. Aus dieser nahezu Verdreifachung läßt sich ohne weiteres ableiten, daß ein entsprechend höherer Anteil an CSB-Fracht auch im fertigen Papier verbleiben muß. Die Werkskläranlage 30 würde ohne die anaerobe Klärstufe 22 mit einer CSB-Fracht von 92 kg anstelle von 56 kg belastet.

Es sei nebenbei noch erwähnt, daß der Strom 10 für das Schmutzstoff-Filtrat wahlweise auch über die Klärstufe 22 mitgeführt werden könnte.

Aus den vorstehenden Erläuterungen geht klar hervor, daß bei gleichbleibender CSB-Belastung des Überlaufwassers aus der Werkskläranlage 30 die im Endprodukt 38 enthaltene CSB-Fracht durch die erfindungsgemäße Anordnung der anaeroben Klärstufe 22 erheblich reduziert werden kann. Hierdurch wird nicht nur das Endprodukt in seiner eventuellen hygienischen Kontaminierung verbessert, es wird auch Stärke für die Leimung eingespart und nicht zuletzt eine erhöhte Menge an Biogas als Energieträger aus der anaeroben Klärstufe 22 gewonnen, da diejenige CSB-Fracht, die im Endprodukt weniger enthalten ist, dort abgebaut und zum großen Teil in Biogas umgewandelt wird.

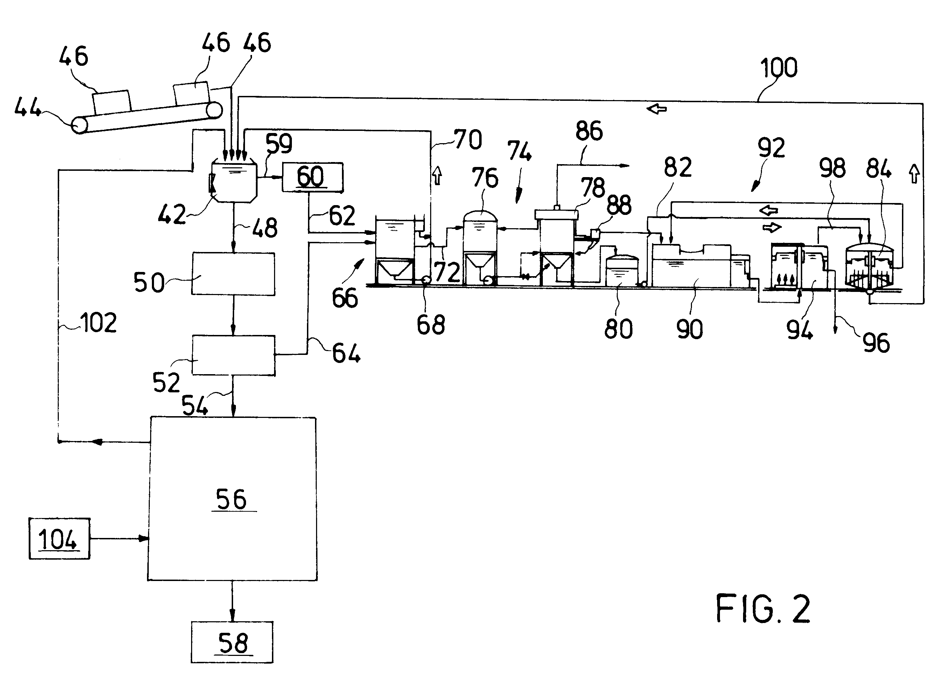

Das Verfahrensschema der Figur 2 stellt eine weitere, bevorzugte Grundvariante der Erfindung dar. Gezeigt ist als wesentliches Aggregat einer Altpapieraufbereitungsanlage ein Altpapierauflöser oder Pulper 42. In diesen Pulper 42 wird in bekannter Weise über ein Förderband 44 Altpapier 46 eingegeben, welches in Form von Ballen dargestellt ist, die jedoch vor ihrer Einführung in den Pulper von ihrer Verpackungsumschnürung befreit werden. In den Pulper 42 wird außerdem aus verschiedenen Quellen Auflösewasser eingeführt, worauf weiter unten noch eingegangen wird. Der aus dem Pulper 42 abgezogene suspendierte Faserstoff 48 wird einer Sortierstufe 50 zugeführt, in der er von verbliebenen Verunreinigungen befreit, aber auch in unterschiedliche Faserlängenfraktionen aufgeteilt werden kann. Zur Sortierung des Stoffes ist bekanntermaßen eine verhältnismäßig große Verdünnung erforderlich. Bevor der Faserstoff, ob er nun aus einer oder zwei aufgetrennten Fraktionen besteht, weiteren Verfahrensoperationen unterworfen werden kann, wird er in Eindickungsaggregaten 52, die für unterschiedliche Faserstoff-Fraktionen gegebenenfalls getrennt ausgeführt sind, wieder auf höhere Konsistenzen eingedickt, die je nach den weiteren Anforderungen zwischen 3 und 20 % Feststoffgehalt liegen können. Der oder die eingedickten Altpapier-Faserstoffe 54 gelangen schließlich zur Weiterverarbeitung in die Papierfabrik 56. Die Papierfabrik 56 verläßt ein Endprodukt 58.

Während der meist kontinuierlichen Auflösung des Altpapieres 46 im Pulper 42 werden aus dem Pulper unter anderem nicht zerfaserbare Abfallbestandteile über eine Leitung 59 abgezogen und in geeigneten Entwässerungsaggregaten 60 entwässert bzw. ausgewaschen. Aus diesen Entwässerungsaggregaten 60 fällt ein Schmutzstoff-Filtrat 62 an. Zusätzliches Schmutzstoff-Filtrat kann auch noch aus der Sortierung 50 anfallen.

Aus der Altpapierfaserstoff-Eindickung fällt in erheblich größeren Mengen Eindickungsrückwasser 64 an. Das Schmutzstoff-Filtrat 62 und das Eindickungsrückwasser 64 werden gemeinsam als Altpapier-Filtrat einer Grobreinigungseinrichtung 66 zugeführt. Diese Grobreinigungseinrichtung 66 kann als sogenannter Trichter-Stoffänger ausgebildet sein, in dem Stoffe, die spezifisch schwerer als Wasser sind, in der unteren Spitze sedimentieren und sich somit dort konzentrieren, und in dem erforderlichenfalls durch Unterstützung eines Flotationsmittels flotierbare Stoffe über einen Überlauf abgezogen werden. Der aus sedimentierten und flotierten Feststoffen bestehende Fangstoff aus der Grobreinigungseinrichtung 66 wird mittels einer Pumpe 68 über eine Leitung 70 wieder dem Pulper 42 für die Altpapierauflösung zugeführt.

Das über eine Leitung 72 aus dem mittleren Bereich der Grobreinigungseinrichtung 66 abgezogene, grobgereinigte Altpapier-Filtrat wird nunmehr einer anaerob-biologischen Klärstufe 74 zugeführt. Diese Klärstufe besteht aus einem Vorversäuerungsbehälter 76, in dem dem Wasser für die anaerobe Biologie erforderliche Zusatzstoffe zugegeben werden, dem eigentlichen Reaktor 78, einem USAB-Reaktor und einem Speicherbehälter 80 für überschüssige Biomasse-Pellets. Um das Anwachsen der Biomasse im Reaktor 78 zu kontrollieren, wird aus dessen unterem Abschnitt gegebenenfalls intermittierend Biomasse abgezogen und zu einer gewissen Menge in dem Speicher 80 zwischenbevorratet. Dieser Vorrat dient im Notfall dazu, den Reaktor 78 wieder in Betrieb zu nehmen, falls die Biomasse darin zerstört werden sollte. Der Überschuß aus dem Biomasse-Speicher 80 wird jedoch über eine Leitung 82 einem Schlammeindicker 84 zugeführt.

Über eine Leitung 86 wird aus dem Kopf des Reaktors 78 durch die biologischen Umsetzungen entstandenes Biogas abgeführt. Das anaerob-biologisch geklärte Wasser wird dem Reaktor 78 über einen Überlauf entnommen und erforderlichfalls in einer Trennstufe 88 von mitgenommenen Festbestandteilen befreit, die in den Reaktor zurückgeleitet werden, während das Wasser dem Belebtschlammbecken 90 einer aeroben Klärstufe 92 zugeführt wird. Der Überlauf aus dem Belebtschlammbecken 90 gelangt in bekannter Weise in ein Nachklärbecken 94. Der Überlauf des Nachklärbeckens 94 gelangt als gereinigtes Abwasser 96 in den Vorfluter. Abgeschiedener Belebtschlamm aus dem Nachklärbecken 94 der aeroben Klärstufe 92 wird über eine Leitung 98 ebenfalls dem Schlammeindicker 84 zugeführt.

Ein besonderes Merkmal der Erfindung ist, daß der eingedickte Klärschlamm aus dem Schlammeindicker 84 über eine Leitung 100 in der Altpapierauflösung, d.h. im Pulper 42 wieder eingesetzt wird.

Aus der dargestellten Wasserkläranlage werden zwar alle Feststoffe in die Altpapieraufbereitung zurückgeführt, das geklärte Wasser wird aber nicht als Auflösewasser wieder verwendet sondern gelangt als Werksabwasser in den Vorfluter. Der Bedarf an Auflösewasser für die Altpapieraufbereitung wird bei dieser Ausführungsform im wesentlichen ausschließlich aus gesammelten Abwässern der Papierfabrik 56 gedeckt, die über eine schematisch dargestellte Leitung 102 dem Pulper 42 zugeführt werden. Der Überschuß an Prozeßwasser aus der Papierfabrik 56 entsteht im wesentlichen dadurch, daß dort an verschiedenen Stellen Frischwasser aus einer Frischwasserversorgung 104 eingesetzt werden muß.

Die dargestellte Verfahrensschaltung bietet den besonderen Vorteil, daß nicht nur die aus dem Altpapier 46 anfallende CSB-Fracht, die im wesentlichen im Altpapier-Filtrat aus der Altpapierauflösung anfällt, dem Prozeß entzogen und unmittelbar einer biologischen Abwasserklärung zugeführt wird, sondern daß auch alle Überschußfiltrate aus der Papierfabrik über die Altpapierauflösung in die Kläranlage für das Altpapier-Filtrat gelangen, um dort zusammen mit diesem im chemischen Sauerstoffbedarf reduziert zu werden. In Bezug auf das den Prozeß verlassende Endprodukt 58 ist die Schaltung nach diesem Ausführungsbeispiel in gleicher Weise vorteilhaft wie diejenige nach dem Ausführungsbeispiel der Figur 1.

## Patentansprüche

1. Verfahren zum Führen und Behandeln des Produktionswassers in einer Papierfabrik mit Altpapieraufbereitungsanlage, in welcher das Altpapier unter Zusatz von Auflösewasser aufgelöst und die dabei gewonnene Faserstoffsuspension anschließend eingedickt und für die Papiererzeugung zur Verfügung gestellt wird, dadurch gekennzeichnet, daß das Eindickungsrückwasser und gegebenenfalls weitere Wässer aus der Altpapieraufbereitungsanlage als Altpapier-Filtrat insgesamt nach gegebenenfalls vorgeschalteter Vorreinigung unmittelbar einer die CSB-Fracht reduzierenden Behandlung unterworfen werden.

2. Verfahren nach Anspruch 1, dadurch gekennzeichnet, daß als die CSB-Fracht reduzierende Behandlung eine anaerob-biologische Wasserklärung durchgeführt wird.

3. Verfahren nach Anspruch 2, dadurch gekennzeichnet, daß für die anaerob-biologische Behandlung des Wassers ein UASB-Reaktor verwendet wird.

4. Verfahren nach mindestens einem der Ansprüche 1 bis 3, dadurch gekennzeichnet, daß das Altpapier-Filtrat vor der die CSB-Fracht reduzierenden Behandlung einer Grobreinigung durch Sedimentation und/oder Flotation unterworfen wird.

5. Verfahren nach Anspruch 4, dadurch gekennzeichnet, daß die durch die Flotation und/oder die Sedimentation erhaltenen Fangstoffe wieder in der Altpapierauf lösung eingesetzt werden.

6. Verfahren nach mindestens einem der Ansprüche 2 bis 5, dadurch gekennzeichnet, daß in der anaerob-biologischen Klärstufe anfallende überschüssige Biomasse gegebenenfalls nach Konzentration in einem Schlammeindicker in die Altpapierauflösung zurückgeführt wird.

7. Verfahren nach mindestens einem der Ansprüche 1 bis 6, dadurch gekennzeichnet, daß das in seiner CSB-Fracht reduzierte Altpapier-Filtrat als Altpapierauflösewasser wieder verwendet wird.

8. Verfahren nach Anspruch 7, dadurch gekennzeichnet, daß dem Altpapier-Filtrat bzw. dem Altpapierauflösewasser erforderlichenfalls zur Ergänzung faserstoffhaltiges Rückwasser aus dem Papiermaschinenbereich zugesetzt wird.

9. Verfahren nach mindestens einem der Ansprüche 2 bis 6, dadurch gekennzeichnet, daß das gereinigte Altpapier-Filtrat aus der anaerob-biologischen Klärstufe in einer aerob-biologischen Klärstufe im wesentlichen bestehend aus Belebungsbecken und Nachklärbecken nachbehandelt wird.

10. Verfahren nach Anspruch 9, dadurch gekennzeichnet, daß das Klarwasser aus der aerob-biologischen Klärstufe nach erforderlichenfalls noch weiteren Behandlung als Fabrikabwasser in den Vorfluter gegeben und als Altpapierauflösewasser gesammelte, im wesentlichen faserstoffhaltige Filtrate und gegebenenfalls sonstige Rückwässer aus dem Papiermaschinenbereich eingesetzt werden.

11. Verfahren nach Anspruch 9 oder 10, dadurch gekennzeichnet, daß die im Nachklärbecken der aerob-biologischen Klärstufe anfallende Feststoffsuspension, im wesentlichen bestehend aus Biomasse gegebenenfalls nach Konzentration in einem Schlammeindicker in die Altpapieraufbereitung zurückgeführt wird.

## Claims

1. A process for conveying and treating the production water in a paper factory with waste paper processing plant, in which the waste paper is disintegrated under the addition of disintegrating water and the fibrous suspension thus obtained is then thickened and made available for paper production, characterized in that the water recovered from thickening and optionally other water from the waste paper processing plant is subjected altogether as a waste paper filtrate directly to a treatment reducing the COD load after preliminary cleaning optionally connected upstream thereof.

2. A process according to claim 1, characterized in that anaerobic biological water purification is carried out as the COD load-reducing treatment.

3. A process according to claim 2, characterized in that a UASB reactor is used for the anaerobic biological treatment of the water.

4. A process according to at least one of claims 1 to 3, characterized in that the waste paper filtrate is subjected to coarse cleaning by sedimentation and/or flotation prior to the COD load-reducing treatment.

5. A process according to claim 4, characterized in that the recovered materials obtained through flotation and/or sedimentation are used again in the waste paper disintegration.

6. A process according to at least one of claims 2 to 5, characterized in that excess biomass arising in the anaerobic biological purifying stage is optionally returned to the waste paper disintegration after concentration in a sludge thickener.

7. A process according to at least one of claims 1 to 6, characterized in that the COD load-reduced waste paper filtrate is reused as waste paper disintegrating water.

8. A process according to claim 7, characterized in that fibre-containing water recovered from the paper machine area is added if necessary as a supplement to the waste paper filtrate or the waste paper disintegrating water.

9. A process according to at least one of claims 2 to 6, characterized in that the cleaned waste paper filtrate from the anaerobic biological purifying stage is after-treated in an aerobic biological purifying stage consisting substantially of activated-sludge tanks and secondary sedimentation tanks.

10. A process according to claim 9, characterized in that the clarified water from the aerobic biological purification stage is introduced as factory waste water into the drainage duct if necessary after still further treatment and substantially fibrous filtrates collected and optionally other recovered water from the paper machine area are used as waste paper disintegrating water.

11. A process according to claim 9 or claim 10, characterized in that the solids suspension arising in the secondary sedimentation tank of the aerobic biological purifying stage and consisting substantially of biomass is returned to the waste paper processing optionally after concentration in a sludge thickener.

## Revendications

1. Procédé pour conduire et traiter les eaux de production dans une usine à papier avec installation de traitement de vieux papiers, dans lequel les vieux papiers sont dilués par adjonction d'eau de dilution et dans lequel la suspension de fibres ainsi obtenue est ensuite épaissie et est mise à disposition pour la fabrication de papier, caractérisé en ce que l'eau de retour d'épaississement et, le cas échéant, d'autres eaux provenant de l'installation de traitement de vieux papiers sont soumises ensemble, comme filtrat de vieux papiers, le cas échéant après préépuration en amont, immédiatement à un traitement réduisant la charge de demande chimique d'oxygène (DCO).

2. Procédé selon la revendication 1, caractérisé en ce qu'une épuration anaérobie biologique de l'eau est utilisée comme traitement réduisant la charge en DCO.

3. Procédé selon la revendication 2, caractérisé en ce qu'un réacteur UASB est utilisé pour le traitement anaérobie biologique de l'eau.

4. Procédé selon au moins une des revendications 1 à 3, caractérisé en ce que le filtrat de vieux papiers est soumis, avant le traitement réduisant la charge en DCO à une épuration grossière par sédimentation et/ou flottation.

5. Procédé selon la revendication 4, caractérisé en ce que les matières obtenues par flottation et/ou sédimentation sont réintroduites dans la solution de vieux papiers.

6. Procédé selon au moins une des revendications 2 à 5, caractérisé en ce que la biomasse excédentaire obtenue dans l'étage d'épuration anaérobie biologique est renvoyée, le cas échéant après concentration dans un épaississeur, dans la dispersion de vieux papiers.

7. Procédé selon au moins une des revendications 1 à 6, caractérisé en ce que le filtrat de vieux papiers à charge en DCO réduite est réutilisé comme eau de dilution de vieux papiers.

8. Procédé selon la revendication 7, caractérisé en ce que de l'eau de retour contenant de la matière fibreuse provenant de la zone de la machine à papier est ajoutée, le cas échéant à titre de complément, au filtrat de vieux papiers ou à l'eau de dilution de vieux papiers.

9. Procédé selon au moins une des revendications 2 à 6, caractérisé en ce que le filtrat de vieux papiers épuré provenant de l'étage d'épuration anaérobie biologique subit un post-traitement dans un étage d'épuration aérobie biologique constitué essentiellement d'un bassin d'épuration par boues activées et d'un bassin de décantation finale.

10. Procédé selon la revendication 9, caractérisé en ce qu'on utilise l'eau claire provenant de l'étage d'épuration aérobie biologique, après le cas échéant encore un autre traitement, comme eau usée d'usine dans le collecteur et comme eau de dilution de vieux papiers, en substance le filtrat contenant des fibres et, le cas échéant, d'autres eaux de retour provenant de la zone de la machine à papier.

11. Procédé selon les revendications 9 et 10, caractérisé en ce que la suspension de matières solides obtenue dans le bassin de décantation finale aérobie bioloqique, constituée essentiellement de biomasse, est recyclée vers le traitement de vieux papiers, le cas échéant après concentration dans un épaississeur.
